# EUROPÄISCHE PATENTSCHRIFT

(11) **EP 2 828 114 B1**
(45) Veröffentlichungstag und Bekanntmachung des Hinweises auf die Patenterteilung: **01.06.2016**
(21) Anmeldenummer: 13710300.8
(22) Anmeldetag: 14.03.2013
(51) Int. Cl.: B60K 35/00

(54) **VERFAHREN ZUR WIEDERGABE VON INFORMATIONEN IN EINEM KRAFTFAHRZEUG UND KRAFTFAHRZEUG, WELCHES ZUR DURCHFÜHRUNG DES VERFAHRENS AUSGEBILDET IST**
METHOD FOR DISPLAYING INFORMATIONS IN AN AUTOMOBILE VEHICLE AND AUTOMOBILE VEHICLE CONFIGURED TO EXECUTE THE METHOD
PROCÉDÉ POUR AFFICHER DES INFORMATIONS DANS UN VÉHICULE AUTOMOBILE ET VÉHICULE AUTOMOBILE CONFIGURÉ POUR EXÉCUTER LE PROCÉDÉ

(30) Priorität: 22.03.2012 DE 102012005858
(43) Veröffentlichungstag der Anmeldung: 28.01.2015
(73) Patentinhaber: Audi AG, 85045 Ingolstadt (DE); Volkswagen AG, 38436 Wolfsburg (DE)
(72) Erfinder: SPRICKMANN KERKERINCK, Paul, 85051 Ingolstadt (DE); BENDEWALD, Lennart, 38442 Wolfsburg (DE); SEBBESSE, Armin, 38120 Braunschweig (DE); MISCHKE, Michael, 12045 Berlin (DE); RIGLEY, Philip, 20357 Hamburg (DE); MAYER, Stefan, 85080 Gaimersheim (DE); CARLS, Carl Aron, 24790 Hassmoor (DE); WITTKÄMPER, Michael, 38102 Braunschweig (DE)
(74) Vertreter: Brandt, Kai
(86) Internationale Anmeldenummer: PCT/EP2013/000785
(87) Internationale Veröffentlichungsnummer: WO 2013/139456

(56) Entgegenhaltungen:
- EP-A1- 2 112 013
- WO-A1-2008/040899
- WO-A2-2012/084123
- DE-A1-102007 051 017
- DE-U1- 29 711 094

## Beschreibung

Die Erfindung betrifft ein Verfahren zur Wiedergabe von Informationen in einem Kraftfahrzeug, welchen Informationen Informationsklassen zugeordnet und welche auf einem Display dargestellt werden, wobei die Informationen auf einem Scheibenwurzeldisplay wiedergegeben werden, wobei jeder Informationsklasse ein Unterbereich des Scheibenwurzeldisplays zugeordnet wird und die Informationen in demjenigen Unterbereich wiedergegeben werden, welcher der den anzuzeigenden Informationen zugeordneten Informationsklasse entspricht.

Aus dem Stand der Technik sind Kraftfahrzeuge bekannt, die verschiedenartige Assistenz- oder Informationssysteme, wie insbesondere Fahrerassistenz-, Navigations- und/oder Infotainmentsysteme, umfassen. Beim Betrieb dieser Assistenz- und Informationssysteme werden typischerweise Informationen fahrzeuginnenseitig zur Unterrichtung von Fahrzeuginsassen wiedergegeben.

Zweckmäßigerweise umfassen die zur Wiedergabe vorgesehenen Anzeigeeinheiten heutzutage Flüssigkristallbildschirme, sogenannte Displays. Diese Displays können dazu eingesetzt werden, eine Vielzahl von Informationen, insbesondere Zustandsgrößen des Kraftfahrzeugs, wie beispielsweise eine Fahrzeuggeschwindigkeit, eine Motordrehzahl und Ähnliches anzuzeigen. Ferner können Ausgaben des Navigationssystems beispielsweise in Form einer digitalen Straßenkarte angezeigt werden. Derartige Displays sind typischerweise in einer Fahrzeuginnenverkleidung, insbesondere dem Armaturenbrett, integriert. Fahrerrelevante Informationen werden beispielsweise über ein Kombinationsinstrument angezeigt, das ein oder mehrere Displays aufweist, welche hinter einem Lenkrad des Kraftfahrzeugs angeordnet sind.

Ferner sind Kraftfahrzeuge bekannt, bei denen zusätzlich im Bereich einer Mittelkonsole ein weiteres Display angeordnet ist.
In jüngster Zeit werden alternative Anzeigekonzepte für Kraftfahrzeuge vorgeschlagen, bei denen beispielsweise fahrerrelevante Informationen direkt auf eine Windschutzscheibe des Kraftfahrzeugs projiziert werden. Solche Anzeigeeinheiten sind insbesondere dazu vorgesehen, Zustandsdaten des Kraftfahrzeugs, wie beispielsweise die momentane Fahrzeuggeschwindigkeit, anzuzeigen.
So ist beispielsweise aus der Druckschrift WO 2008/040899 A1 eine Anzeigeeinheit bekannt, die eine Anzeigefläche, welche in einem oberen Bereich des Armaturenbretts in der Nähe einer unteren Begrenzung der Windschutzscheibe angeordnet ist, aufweist. Die Anzeigefläche weist eine undurchsichtige Beschichtung auf, auf der beim Betrieb Informationen mittels eines Projektors projiziert werden.
Ferner ist aus DE 297 11 094 U1 eine Anzeigeeinheit bekannt, welche als Flüssigkristalldisplay ausgebildet ist und unmittelbar an bzw. in der Windschutzscheibe angeordnet ist.
Die Druckschrift DE 10 2007 051 017 A1 offenbart ein Bediensystem für ein Kraftfahrzeug mit den Merkmalen des Oberbegriffs des Anspruchs 1.
Das Bediensystem umfasst eine Bildschirmanzeige sowie zumindest ein manuelles Betätigungselement zur Auswahl und/oder zur Aktivierung von wenigstens einem Eintrag in einer aktuellen Menüebene. Die Bildschirmanzeige kann Bestandteil eines sich weiter erstreckenden Scheibenwurzeldisplays sein, wobei bei einem links gelenkten Fahrzeug links neben der Bildschirmanzeige eine Anzeigeeinrichtung angeordnet ist, die über die aktuellen Betriebszustände des Kraftfahrzeugs, beispielsweise über eine Geschwindigkeit informiert.
Aufgrund der großen Fülle von Informationen, die in heutigen Kraftfahrzeugen angeboten wird, kommen oftmals mehrere Anzeigeeinheiten bzw. Displays bei der Darstellung der Informationen zum Einsatz, die an verschiedenen Orten im Fahrzeuginnenraum angeordnet sind. Dies hat zum Nachteil, dass eventuell für einen bestimmten Fahrzeuginsassen relevante Informationen nicht einsehbar sind oder zu klein dargestellt sind, so dass diese beispielsweise von einem im Fondbereich des Kraftfahrzeugs Platz nehmenden Fahrzeuginsassen nicht abgelesen werden können.

Ausgehend von diesem Stand der Technik ist es somit Aufgabe der vorliegenden Erfindung, ein Verfahren zur Wiedergabe von Informationen in einem Kraftfahrzeug der eingangs genannten Art anzugeben, das eine umfassende Information der Fahrzeuginsassen ermöglicht.

Die Aufgabe wird gelöst durch ein Verfahren der eingangs genannten Art, wobei erfindungsgemäß die anzuzeigenden Informationen in fahrerrelevante Informationen, beifahrerrelevante Informationen und allgemeinrelevante Informationen eingeteilt werden, wobei den fahrerrelevanten Informationen, den beifahrerrelevanten Informationen und den allgemeinrelevanten Informationen jeweils eine Informationsklasse zugeordnet wird und wobei fahrerrelevante Informationen in dem einem Fahrersitz gegenüberliegend angeordneten Unterbereich des Scheibenwurzeldisplays angezeigt werden und beifahrerrelevante Informationen in dem einen Beifahrersitz gegenüberliegend angeordneten Unterbereich des Scheibenwurzeldisplays angezeigt werden, und wobei allgemeinrelevante Informationen in dem Unterbereich des Scheibenwurzeldisplays angezeigt werden, der zwischen dem dem Fahrersitz gegenüberliegend angeordneten Unterbereich und dem dem Beifahrersitz gegenüberliegend angeordneten Unterbereich des Scheibenwurzeldisplays angeordnet ist.

Unter einem Scheibenwurzeldisplay wird hierbei eine Anzeigeeinheit verstanden, die an einer unterseitigen Begrenzung einer Windschutzscheibe angeordnet ist und sich somit über zumindest eine Breite der Windschutzscheibe erstreckt. Das Scheibenwurzeldisplay umfasst vorzugsweise ein Flüssigkristalldisplay (Liquid Cristal Display, LCD) oder ein OLED-Display, das bandförmig ausgebildet ist. In einer alternativen Ausführungsform ist das Scheibenwurzeldisplay als Projektionsdisplay ausgebildet. Aufgrund der großen räumlichen Ausdehnung lässt sich das Scheibenwurzeldisplay zur besonders übersichtlichen Anzeige bzw. Wiedergabe von Informationen verwenden.

Das Scheibenwurzeldisplay erstreckt sich vorzugsweise über zumindest die Hälfte der Breite der Windschutzscheibe. Besonders bevorzugt erstreckt sich das Scheibenwurzeldisplay über 50 % bis 70% der Windschutzscheibenbreite.

Die Informationen werden in Informationsklassen eingeteilt, denen entsprechend verschiedene Bereiche des Scheibenwurzeldisplays zugeordnet sind. Demzufolge werden Informationen, die einer bestimmten Informationsklasse angehören, immer am gleichen Ort auf dem Scheibenwurzeldisplay angezeigt. Dies hat zum Vorteil, dass ein klares Anzeigekonzept gegeben ist, mit welchem sich Fahrzeuginsassen schnell vertraut machen können. Ferner sind, aufgrund der großen räumlichen Ausdehnung des Scheibenwurzeldisplays über zumindest die Breite der Windschutzscheibe, weite Bereiche des Scheibenwurzeldisplays für mehrere, im Idealfall alle, Fahrzeuginsassen einsehbar. Die Darstellung der Informationen auf dem Scheibenwurzeldisplay kann in entsprechender Größe erfolgen, so dass diese auch von Fahrzeuginsassen, die im Fondbereich des Kraftfahrzeugs Platz nehmen, leicht abgelesen werden können. Vorteilhafterweise sind die Unterbereiche, die zu unterschiedlichen Informationsklassen korrespondieren, horizontal voneinander beabstandet, um die Übersichtlichkeit der Darstellung weiter zu verbessern. Damit ist insbesondere auch eine eindeutige Zuordnung der Informationen, die in einem bestimmten Unterbereich angezeigt werden, zu der zugehörigen Informationsklasse erreicht.

Dabei kann auch vorgesehen sein, dass eine anzuzeigende Information mehreren Informationsklassen zugeteilt wird. Entsprechend wird dann die so zugeordnete Information in allen Unterbereichen wiedergegeben, welche zu den Informationsklassen korrespondieren.

Die anzuzeigenden Informationen sind in fahrerrelevante Informationen, beifahrerrelevante Informationen und/oder allgemeinrelevante Informationen eingeteilt. Entsprechend sind den fahrerrelevanten Informationen, den beifahrerrelevanten Informationen und/oder den allgemeinrelevanten Informationen jeweils eine Informationsklasse zugeordnet. Die fahrerrelevanten Informationen, die beifahrerrelevanten Informationen und/oder die allgemeinrelevanten Informationen werden entsprechend in voneinander beabstandeter Unterbereiche des Scheibenwurzeldisplays wiedergegeben. Dabei erfolgt die Darstellung der fahrerrelevanten Informationen vorzugsweise in einem Bereich des Scheibenwurzeldisplays, der vom Fahrer des Kraftfahrzeugs leicht einsehbar ist. Entsprechendes gilt für die Darstellung der beifahrerrelevanten Informationen in dem dafür vorgesehenen Unterbereich des Scheibenwurzeldisplays. Die Darstellung der allgemeinrelevanten Informationen erfolgt in einem Unterbereich des Scheibenwurzeldisplays, der idealerweise allen Fahrzeuginsassen zugänglich ist.

Die fahrerrelevanten Informationen werden in dem Unterbereich des Scheibenwurzeldisplays angezeigt, welcher einem Fahrersitz gegenüberliegend angeordnet ist. Die fahrerrelevanten Informationen werden insbesondere im peripheren Sichtfeld des Fahrers angezeigt, so dass der Fahrer zum Ablesen der dort dargestellten Informationen seinen Blick nur kurzzeitig vom Verkehrsgeschehen abwenden muss und folglich eine Ablenkung des Fahrers während der Fahrt minimiert ist. Zusätzlich werden beifahrerrelevante Informationen in dem einem Beifahrersitz gegenüberliegend angeordneten Unterbereich des Scheibenwurzeldisplays angezeigt.

Erfindungsgemäß werden allgemeinrelevante Informationen im Unterbereich des Scheibenwurzeldisplays angezeigt, der zwischen dem dem Fahrersitz gegenüberliegend angeordneten Unterbereich und dem dem Beifahrersitz gegenüberliegend angeordneten Unterbereich des Scheibenwurzeldisplays angeordnet ist. Dieser Bereich ist typischerweise von Fahrzeuginsassen einsehbar, die in einem Fondbereich, insbesondere auf einer Rücksitzbank, Platz nehmen. Die Darstellung der allgemeinrelevanten Informationen erfolgt in entsprechender Größe, so dass diese von den hinten im Kraftfahrzeug Platz nehmenden Fahrzeuginsassen leicht abgelesen werden können.

Beispielsweise kann die Wiedergabe eines Films oder Videoclips als Information - abgesehen vom Fahrer - für alle Fahrzeuginsassen von Interesse sein. Bevorzugter Weise erfolgt die Wiedergabe auf mehreren, wenigstens zwei, nebeneinander liegenden Bereichen des Scheibenwurzeldisplays, insbesondere auf dem zur Anzeige von beifahrerrelevanten Informationen vorgesehenen Unterbereich und auf dem zur Anzeige von allgemeinrelevanten Informationen vorgesehenen Unterbereich des Scheibenwurzeldisplays. Dazu wird die der Filmwiedergabe entsprechende Information der Informationsklassen von beifahrerrelevanten Informationen und allgemeinrelevanten Informationen zugeteilt.

In einem Ausführungsbeispiel der Erfindung werden als fahrerrelevante Informationen Ausgaben eines Navigationssystems, eine Fahrzeuggeschwindigkeit, eine Motordrehzahl, ein Tankfüllstand, ein Gesamtkilometerstand und/oder eine Statusgröße, insbesondere ein fahrzeug- und/oder fahrsicherheitsrelevanten Warnhinweis, wiedergegeben. Derartige Informationen sind typischerweise nur für den Fahrer des Kraftfahrzeugs von Belang.

Als beifahrerrelevante Informationen werden in einem vorteilhaften Ausführungsbeispiel der Erfindung Ausgaben eines Infotainmentsystems wiedergegeben. Insbesondere ist vorgesehen, auf dem dem Beifahrer zugeordneten Unterbereich des Scheibenwurzeldisplays Mediendaten, insbesondere Videoclips oder Filme, darzustellen. Ferner ist vorgesehen, Seiten des Internets bzw. des Worldwide-Webs (WWW) auf diesem dem Beifahrersitz gegenüberliegend angeordneten Unterbereich auszugeben.

Als allgemeinrelevante Informationen werden vorzugsweise eine Uhrzeit, ein Datum, eine Innentemperatur, eine Umgebungstemperatur des Kraftfahrzeugs und/oder ein Tageskilometerstand des Kraftfahrzeugs wiedergegeben. Diese Informationen sind typischerweise für alle Fahrzeuginsassen von Bedeutung, so dass sich eine Darstellung derartiger allgemeinrelevanter Informationen im zentralen Unterbereich, der zwischen dem dem Fahrersitz zugeordneten und dem dem Beifahrersitz zugeordneten Unterbereich des Scheibenwurzeldisplays angeordnet ist, anbietet.

Es versteht sich, dass die hier vorgenommene Einteilung von Informationen in fahrerrelevante, beifahrerrelevante und allgemeinrelevante Informationen lediglich beispielhaft aufzufassen ist. Eine beliebige Einteilung der Informationen in entsprechend geeignete Informationsklassen kann vorgenommen werden, wenn dies für sinnvoll erachtet wird. Ferner sind die hier angeführte Aufzählung von Beispielen für anzuzeigende Informationen, wie Uhrzeit, Datum, usw. nicht abschließend aufzufassen. Beliebige andere zur Wiedergabe im Kraftfahrzeug vorgesehene Informationen können im Unterbereich des Scheibenwurzeldisplays wiedergegeben werden, der zu der der Information zugeordneten Informationsklasse korrespondiert.

Die Erfindung betrifft ferner ein Kraftfahrzeug mit dem Scheibenwurzeldisplay zur Wiedergabe der Informationen und eine zur Ansteuerung des Scheibenwurzeldisplays ausgebildete Steuereinheit. Das Kraftfahrzeug ist derart ausgebildet, dass es das bereits erläuterte Verfahren zur fahrzeuginnenseitigen Wiedergabe von Informationen ausführt. Die Wiedergabe der Informationen erfolgt in den Unterbereichen des Scheibenwurzeldisplays, die zu den Informationsklassen der darzustellenden Informationen korrespondieren.

Weitere Vorteile und Einzelheiten der Erfindung werden im Folgenden anhand von Ausführungsbeispielen und unter Bezugnahme auf die Zeichnungen erläutert. Dabei zeigen:
- Fig. 1: schematisch eine perspektivische Ansicht eines Fahrzeuginnenraums, in dem ein Scheibenwurzeldisplay angeordnet ist,
- Fig. 2: schematisch ein Kraftfahrzeug, welches das Scheibenwurzeldisplay und eine das Scheibenwurzeldisplay ansteuernde Steuereinheit aufweist.

Einander entsprechende Teile sind in allen Figuren mit den gleichen Bezugszeichen versehen.

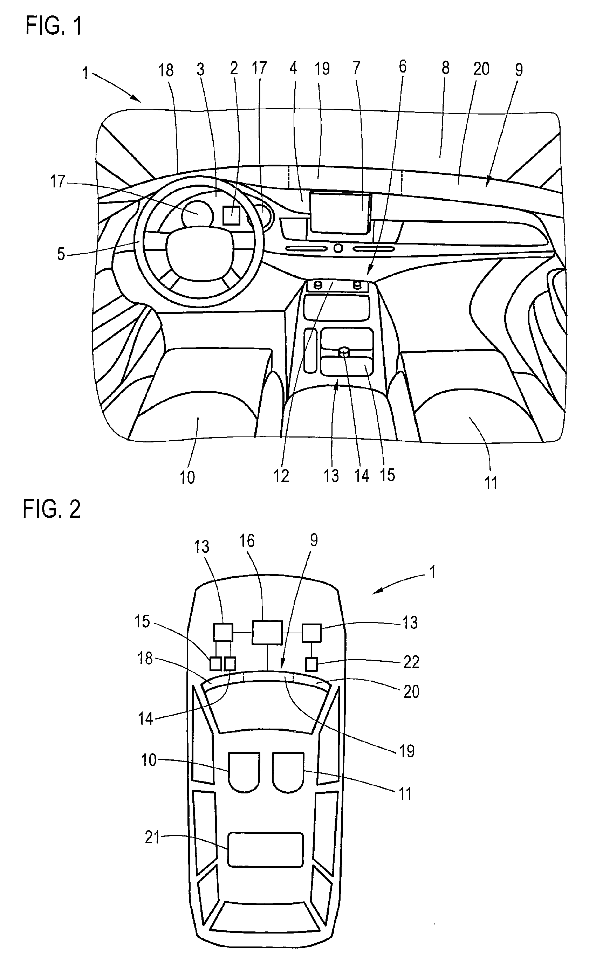

Fig. 1 zeigt einen vorderseitigen Bereich eines Fahrzeuginnenraums eines Kraftfahrzeugs 1. Zur fahrerzeuginnenseitigen Ausgabe von Informationen weist das exemplarisch dargestellte Kraftfahrzeug 1 eine Vielzahl von Anzeigeeinheiten auf. So ist ein Display 2 in einem Kombinationsinstrument 3, welches im Armaturenbrett 4 integriert ist und hinter einem Lenkrad 5 angeordnet ist, vorgesehen. Im Bereich einer Mittelkonsole 6 ist ein weiteres Display 7, insbesondere zur Wiedergabe von Informationen eines Infotainmentoder eines Navigationssystems des Kraftfahrzeugs 1, vorgesehen.

Im unteren Bereich einer Windschutzscheibe 8 ist eine bandförmige Flüssigkristallanzeigeeinheit angeordnet, die als Scheibenwurzeldisplay 9 bezeichnet wird. Das Scheibenwurzeldisplay 9 erstreckt sich zumindest über die Breite der Windschutzscheibe 8 und ist somit im peripheren Sichtfeld eines Fahrers angeordnet, welcher auf einem Fahrersitz 10 Platz nimmt. Entsprechend können auch auf dem Scheibenwurzeldisplay 9 angezeigte Informationen von einem Beifahrer, welcher auf einem Beifahrersitz 11 Platz nimmt, bequem abgelesen werden. Im Bereich der Mittelkonsole 6 sind weitere Komponenten des Infotainmentsystems angeordnet. In Fig. 1 ist beispielhaft eine Audioanlage 12 des Infotainmentsystems gezeigt, mittels welcher fahrzeuginnenseitig Musiktitel wiedergegeben werden können.

Ebenfalls im Bereich der Mittelkonsole 6 angeordnete Eingabeelemente 14, 15 einer Eingabeeinheit 13 dienen zur Bedienung von Informations- und/oder Assistenzsystemen, wie insbesondere dem Infotainmentsystem, einem Navigationssystem und/oder Ähnlichem, des Kraftfahrzeugs 1 bzw. dienen bei der Anpassung der fahrzeuginnenseitigen Wiedergabe der Informationen, wobei die Anzeigeeinrichtungen 2, 7, 9 entsprechend angesteuert werden. Beispielhaft ist ein Dreh-Drück-Steller 14 gezeigt, der zur Erfassung von benutzerseitigen Bedieneingaben ausgebildet ist. Abhängig von der erfolgten Bedieneingabe wird insbesondere die Darstellung der auf dem Scheibenwurzeldisplay 9 angezeigten Informationen verändert, wobei das Scheibenwurzeldisplay 9 von einer in Fig. 2 gezeigten Steuereinheit 16 angesteuert wird. Ein weiteres Eingabeelement ist als Touchpad 15 ausgebildet und weist somit eine berührungssensitive Oberfläche auf. Bei Druckausübung auf die berührungssensitive Oberfläche werden Fingerbewegungen eines Nutzers, insbesondere des Fahrers oder des Beifahrers, als Signale erfasst, die entsprechend der Steuereinheit 16 zur Steuerung der Anzeigeeinheiten 2, 7, 9 zugeführt werden.

In einem alternativen Ausführungsbeispiel ist das Touchpad 19 als beleuchteter Touchscreen ausgeführt, der insbesondere bei einer Nachtfahrt leicht lokalisiert werden kann.

Ferner ist eine zur Spracherfassung und Spracherkennung in Fig. 2 schematisch dargestellte Eingabeeinheit 13 vorgesehen, die zur Erfassung von Sprachkommandos ausgebildet ist, welche bei der Steuerung der fahrzeuginnenseitigen Wiedergabe der Information Verwendung finden.

Das Display 2, das Scheibenwurzeldisplay 9 und das weitere Display 7 sind als Flüssigkristallbildschirme (Liquid Cristal Display, LCD) ausgebildet. Im Kombinationsinstrument 3 angeordnete analoge Zeigerinstrumente 17 dienen zur Darstellung einer Fahrzeuggeschwindigkeit und einer Motordrehzahl.

Das in Fig. 1 dargestellte Scheibenwurzeldisplay 9 ist in drei horizontal nebeneinander angeordnete Unterbereiche 18, 19, 20 eingeteilt. Die Unterbereiche 18, 19, 20 beschreiben eine virtuelle und somit äußerlich nicht unmittelbar ersichtliche Einteilung des kontinuierlichen und bandförmig ausgebildeten Scheibenwurzeldisplays 9. Jeder Unterbereich 18, 19, 20 dient zur Darstellung von Informationen einer bestimmten Informationskategorie. Dabei können selbstverständlicherweise Informationen auch mehreren Informationskategorien zugewiesen werden. Die hier beispielhaft gezeigte Darstellung entspricht einer Einteilung der darzustellenden Informationen in drei Informationskategorien, die jeweils fahrerrelevante Informationen, beifahrerrelevante Informationen und allgemeinrelevante Informationen beinhalten.

Zur Übersichtlichkeit der Darstellung werden die fahrerrelevanten Informationen in einem ersten Unterbereich 18 des Scheibenwurzeldisplays 9 angezeigt, der direkt dem Fahrersitz 10 gegenüberliegend angeordnet ist. Somit ist sichergestellt, dass die dort gezeigten Informationen zumindest für den Fahrer leicht ablesbar sind.

Die beifahrerrelevanten Informationen werden in einem zweiten Unterbereich 20 des Scheibenwurzeldisplays 9 angezeigt, der dem Beifahrersitz 11 gegenüberliegend angeordnet ist. Dort angezeigte Informationen können somit zumindest vom Beifahrer leicht wahrgenommen werden.

Entsprechend werden allgemeinrelevante Informationen in einem dritten Unterbereich 19 des Scheibenwurzeldisplays 9 angezeigt, der zwischen dem ersten Unterbereich 18 und dem zweiten Unterbereich 20 angeordnet ist. Die im dritten Unterbereich 13 gezeigte Informationen können auch von den Fahrzeuginsassen, die im Fondbereich des Kraftfahrzeugs 1 Platz nehmen, leicht abgelesen werden. Insbesondere können die im dritten Unterbereich 19 angezeigten Informationen von Fahrzeuginsassen, die auf einer Rücksitzbank 21, welche in Fig. 2 schematisch gezeigt ist, wahrgenommen werden.

Fig. 2 zeigt das Kraftfahrzeug 1, welches zur Durchführung des Verfahrens zur Wiedergabe von Informationen ausgebildet ist, in einer schematischen Darstellung. Die Steuereinheit 16 ist zur selektiven Ansteuerung der Unterbereiche 18, 19, 20 des Scheibenwurzeldisplays 9 ausgebildet. Somit ist erreicht, dass die fahrerrelevanten Informationen auf dem ersten Unterbereich 18, die beifahrerrelevanten Informationen auf dem zweiten Unterbereich 20 und die allgemeinrelevanten Informationen auf dem zentralen dritten Unterbereich 19 wiedergegeben werden. Die Steuereinheit 16 ist exemplarisch mit zwei Eingabeeinheiten 13 verbunden. Dies ermöglicht eine Ansteuerung des Scheibenwurzeldisplays 9 in Abhängigkeit von mittels der Eingabeeinheiten 13 erfassten Bedieneingaben.

Eines der beiden Eingabeeinheiten 13 ist zur Spracherkennung ausgebildet und umfasst ein Mikrofon 22 als Eingabeelement. Das andere der beiden exemplarisch dargestellten Eingabeeinheiten 13 umfasst den bereits in Fig. 1 gezeigten Dreh-Drück-Steller 14 und das Touchpad 15.

Es versteht sich, dass die hier anhand der Figuren beschriebenen Ausführungsbeispiele der Erfindung lediglich beispielhaft und nicht einschränkend aufzufassen sind. Insbesondere ist in Weiterbildung der Erfindung vorgesehen, herkömmliche Anzeigeeinrichtungen bzw. die Displays 2, 7 durch das Scheibenwurzeldisplay 9 zu ersetzen. Entsprechend können auch die herkömmlichen, analogen Zeigerinstrumente 17 dadurch ersetzt werden, dass eine entsprechende Darstellung der Fahrzeuggeschwindigkeit und der Motordrehzahl im ersten Unterbereich 18 erfolgt.

In dem hier beispielhaften gezeigten Ausführungsbeispiel umfassen fahrerrelevante Informationen Ausgaben eines Navigationssystem, die Fahrzeuggeschwindigkeit, die Motordrehzahl, einen Tankfüllstand, einen Gesamtkilometerstand und/oder eine Statusgröße, insbesondere einen fahrzeug- und/oder fahrsicherheitsrelevanten Warnhinweis. Beifahrerrelevante Informationen sind Ausgaben des Infotainmentsystems, insbesondere Senderlisten, Videos, Filme und/oder aufgerufene Seiten des Internets bzw. des Worldwide-Webs. Allgemeinrelevante Informationen umfassen eine Uhrzeit, ein Datum, eine Innentemperatur, eine Umgebungstemperatur und/oder einen Tageskilometerstand des Kraftfahrzeugs.

Es versteht sich, dass die Aufzählung der hier beispielhaft genannten Informationen nicht abschließend ist und selbstverständlich auch andere geeignete Einteilungen in einzelne Informationsklassen vorgenommen werden können.

## Patentansprüche

1. Verfahren zur Wiedergabe von Informationen in einem Kraftfahrzeug (1), welchen Informationen Informationsklassen zugeordnet und welche auf einem Display (2, 7) dargestellt werden, wobei die Informationen auf einem Scheibenwurzeldisplay (9) wiedergegeben werden, wobei jeder Informationsklasse ein Unterbereich (18, 19, 20) des Scheibenwurzeldisplays (9) zugeordnet wird und die Informationen in demjenigen Unterbereich (18, 19, 20) wiedergegeben werden, welcher der den anzuzeigenden Informationen zugeordneten Informationsklasse entspricht,
**dadurch gekennzeichnet,**
**dass** die anzuzeigenden Informationen in fahrerrelevante Informationen, beifahrerrelevante Informationen und allgemeinrelevante Informationen eingeteilt werden, wobei den fahrerrelevanten Informationen, den beifahrerrelevanten Informationen und den allgemeinrelevanten Informationen jeweils eine Informationsklasse zugeordnet wird und wobei fahrerrelevante Informationen in dem einem Fahrersitz (10) gegenüberliegend angeordneten Unterbereich (18) des Scheibenwurzeldisplays (9) angezeigt werden und beifahrerrelevante Informationen in dem einem Beifahrersitz (11) gegenüberliegend angeordneten Unterbereich (20) des Scheibenwurzeldisplays (9) angezeigt werden, und wobei allgemeinrelevante Informationen in dem Unterbereich (19) des Scheibenwurzeldisplays (9) angezeigt werden, der zwischen dem dem Fahrersitz (10) gegenüberliegend angeordneten Unterbereich (18) und dem dem Beifahrersitz (11) gegenüberliegend angeordneten Unterbereich (20) des Scheibenwurzeldisplays (9) angeordnet ist.

2. Verfahren nach Anspruch 1,
**dadurch gekennzeichnet,**
**dass** die Unterbereiche (18, 19, 20), die zu unterschiedlichen Informationsklassen korrespondieren, horizontal voneinander beabstandet sind.

3. Verfahren nach Anspruch 1 oder 2,
**dadurch gekennzeichnet,**
**dass** als allgemeinrelevante Informationen eine Uhrzeit, ein Datum, eine Innentemperatur, eine Umgebungstemperatur und/oder ein Tageskilometerstand wiedergegeben werden.

4. Verfahren nach einem der vorangehenden Ansprüche,
**dadurch gekennzeichnet,**
**dass** als fahrerrelevante Informationen Ausgaben eines Navigationssystems, eine Fahrzeuggeschwindigkeit, eine Motordrehzahl, ein Tankfüllstand, ein Gesamtkilometerstand und/oder eine Statusgröße, insbesondere ein fahrzeug- und/oder fahrsicherheitsrelevanter Warnhinweis, wiedergegeben werden.

5. Verfahren nach einem der vorangehenden Ansprüche,
**dadurch gekennzeichnet,**
**dass** als beifahrerrelevante Informationen Ausgaben eines Infotainmentsystems wiedergegeben werden.

6. Kraftfahrzeug (1), umfassend ein Scheibenwurzeldisplay (9) und eine zur Ansteuerung des Scheibenwurzeldisplays ausgebildete Steuereinheit (16), welches derart ausgebildet ist, dass es das Verfahren nach einem der voranstehenden Ansprüche ausführt.

## Claims

1. Method of forwarding information in a motor vehicle (1), to which information information classes are assigned and which is shown on a display (2, 7), wherein the information is set out on a windscreen base display (9) wherein a sub-section (18, 19, 20) of the windscreen base display (9) is assigned to each information class and the information is set out the sub-section (18, 19, 20) that corresponds to the information class assigned to the information to be shown
**characterised in that**
the information to be shown is divided into driver-relevant information, passenger-relevant information and generally relevant information, wherein an information class is assigned to each of the driver-relevant information, the passenger-relevant information and the generally relevant information and wherein the driver-relevant information is shown in the sub-section (18) of the windscreen base display (9) arranged opposite the driver's seat (10) and the passenger-relevant information is shown in the sub-section (20) of the windscreen base display (9) arranged opposite the passenger seat (11) and where generally relevant information is shown in the sub-section (19) of the windscreen base display (9) arranged between the sub-section (18) arranged opposite the driver's seat (10) and the sub-section (20) of the windscreen base display (9) arranged opposite the passenger seat (11)

2. Method according to claim 1
**characterised in that**
the sub-sections (18, 19, 20) which correspond to the different information classes are horizontally spaced with regard to each other.

3. Method according to claim 1 or 2
**characterised in that**
shown as generally relevant information is a time, a date, an interior temperature, an outdoor temperature and/or a daily mileage are.

4. Method according to any one of the preceding claims
**characterised in that**
shown as driver-relevant information is information from a navigation system, a vehicle speed, an engine speed, a fuel tank filling level, a total mileage and/a status value, more particularly a vehicle and/or driving safety-relevant warning

5. Method according to any one of the preceding claims
**characterised in that**
shown as passenger-relevant information is information from an infotainment system.

6. Motor vehicle (1) comprising a windscreen base display (9) and a control unit (16) for controlling the windscreen base display which is designed in such a way that it implements the method according to any one of the preceding claims.

## Revendications

1. Procédé de reproduction d'informations dans un véhicule automobile (1), des classes d'informations étant associées auxdites informations et lesdites informations étant présentées sur un dispositif d'affichage (2, 7), les informations étant reproduites sur un affichage en pied de pare-brise (9), une sous-zone (18, 19, 20) de l'affichage en pied de pare-brise (9) étant associée à chaque classe d'informations et les informations étant reproduites dans la sous-zone (18, 19, 20) qui correspond à la classe d'informations associée aux informations à afficher,
**caractérisé en ce que** les informations à afficher sont divisées en informations concernant le conducteur, informations concernant le passager et informations générales, une classe d'informations étant associée respectivement aux informations concernant le conducteur, aux informations concernant le passager et aux informations générales, des informations concernant le conducteur étant affichées dans la sous-zone (18) de l'affichage en pied de pare-brise (9) qui est agencée en face d'un siège de conducteur (10), des informations concernant le passager étant affichées dans la sous-zone (20) de l'affichage en pied de pare-brise (9) qui est agencée en face d'un siège de passager (11) et des informations générales étant affichées dans la sous-zone (19) de l'affichage en pied de pare-brise (9) qui est agencée entre la sous-zone (18) agencée en face d'un siège de conducteur (10) et la sous-zone (20) de l'affichage en pied de pare-brise (9) qui est agencée en face d'un siège de passager (11).

2. Procédé selon la revendication 1, **caractérisé en ce que** les sous-zones (18, 19, 20) qui correspondent à des classes d'informations différentes sont à une certaine distance horizontale les unes des autres.

3. Procédé selon la revendication 1 ou 2, **caractérisé en ce que** l'on reproduit comme informations générales l'heure, la date, la température intérieure, la température de l'environnement et/ou l'état du compteur kilométrique journalier.

4. Procédé selon l'une des revendications précédentes, **caractérisé en ce que** l'on reproduit comme informations concernant le conducteur les données fournies par un système de navigation, la vitesse du véhicule, le régime du moteur, le niveau de carburant dans le réservoir, le kilométrage total et/ou une grandeur d'état, notamment un avertissement concernant le véhicule et/ou la sécurité de conduite.

5. Procédé selon l'une des revendications précédentes, **caractérisé en ce que** l'on reproduit comme informations concernant le passager les données fournies par un système d'infodivertissement.

6. Véhicule automobile (1), comprenant un affichage en pied de pare-brise (9) et une unité de commande (16) qui est conçue pour la commande de l'affichage en pied de pare-brise et qui est conçue de manière à mettre en oeuvre le procédé selon l'une des revendications précédentes.
